# EUROPÄISCHE PATENTSCHRIFT

(11) **EP 4 191 350 B1**
(45) Veröffentlichungstag und Bekanntmachung des Hinweises auf die Patenterteilung: **27.08.2025**
(21) Anmeldenummer: 22210078.6
(22) Anmeldetag: 29.11.2022
(51) Int. Cl.: G05B 19/4093, G05B 19/4097

(54) **VERFAHREN ZUM BESTIMMEN EINER WERKZEUGBAHN UND VERFAHREN ZUR MATERIALABTRAGENDEN BEARBEITUNG EINES WERKSTÜCKS**
METHOD FOR DETERMINING A TOOL PATH AND METHOD FOR MACHINING OF A WORKPIECE BY REMOVING MATERIAL
PROCÉDÉ DE DÉTERMINATION D'UNE TRAJECTOIRE D'OUTIL ET PROCÉDÉ D'USINAGE PAR ENLÈVEMENT DE MATIÈRE D'UNE PIÈCE À USINER

(30) Priorität: 02.12.2021 DE 102021131830
(43) Veröffentlichungstag der Anmeldung: 07.06.2023
(73) Patentinhaber: OPEN MIND Technologies AG, 82234 Wessling (DE)
(72) Erfinder: Brambs, Peter, 80803 München (DE); Bourdages, David, Kamouraska, Québec, G0L1M0 (CA); Armbruster, Hans-Ulrich, 82008 Unterhaching (DE)
(74) Vertreter: Weickert, Jonas

(56) Entgegenhaltungen:
- DE-A1- 102016 117 932
- DE-A1- 102016 214 439

## Beschreibung

Die Erfindung betrifft ein Verfahren zum Bestimmen einer Werkzeugbahn für eine materialabtragende Bearbeitung eines Werkstücks in einer Bearbeitungsmaschine. Des Weiteren betrifft die Erfindung ein Computerprogramm zum Durchführen eines solchen Verfahrens sowie ein Computerprogrammprodukt mit einem Speichermedium, auf dem Programmcode eines solchen Computerprogramms gespeichert ist. Die Erfindung betrifft zudem ein Verfahren zur materialabtragenden Bearbeitung des Werkstücks.

Werden komplexe Bauteile spanend bearbeitet, können verschiedene Frässtrategien für unterschiedliche Bereiche des Bauteils zum Einsatz kommen. Beispielsweise beim Schlichten kann sich die Wahl der Bearbeitungsstrategie für einen bestimmten Bauteilbereich unter anderem nach dessen lokaler Flächenneigung richten. Oftmals wird das Bauteil in Bereiche aufgeteilt, die als "steil" bzw. "flach" bezeichnet werden können. Den flachen und steilen Bereichen kann dann eine unterschiedliche Strategie zugeordnet werden, die deren unterschiedliche Neigung berücksichtigt. Die Aufteilung in flache und steile Bereiche kann beispielsweise durch Verwendung eines geeigneten Grenzwinkels erfolgen. Flächen oder Flächenabschnitte, die einen Neigungswinkel aufweisen, der unterhalb des Grenzwinkels liegt, gelten dann als flache Bereiche; Flächen oder Flächenabschnitte, die einen Neigungswinkel aufweisen, der größer als der Grenzwinkel ist, gelten als steile Bereiche. Es kann dabei auch vorkommen, dass ein Übergang zwischen einem flachen und einem steilen Bereich sich innerhalb einer einzigen Fläche befindet, beispielsweise im Fall einer gekrümmten Fläche, die steile und flache Abschnitte umfasst.

Für viele Bearbeitungssituationen kann zur Bearbeitung von steilen Bereichen eine ebenenweise Schlichtbearbeitung ("Z-Level"-Bearbeitung) geeignet sein. Dabei werden in einem, beispielsweise konstanten, Abstand entlang der z-Achse des NC-Koordinatensystems zueinander parallele Ebenen durch ein Bauteilmodell gelegt und mit den als steil charakterisierten Flächen geschnitten. Ausgehend von den resultierenden Schnittkonturen können dann Werkzeugbahnen berechnet werden, auf denen ein Werkzeug die Konturen herausarbeitet.

Für flache Bauteilbereiche wählt man hingegen oftmals eine andere Strategie, beispielsweise eine Projektionsmethode, bei der ein regelmäßiges zweidimensionales Bahnmuster in Richtung der z-Achse auf die jeweiligen Flächen projiziert wird.

Zu beachten ist dabei, dass die für flache bzw. steile Bereiche gewählte Bearbeitungsstrategie jeweils für die andere Art von Bereichen weniger gut geeignet wäre, da aufgrund der deutlich anderen Neigung die erhaltenen Bahnsegmente stark auseinanderstreben würden. Es werden daher unterschiedliche Methoden zur Bestimmung von Bahnsegmenten einer Werkzeugbahn kombiniert. Um im Falle einer solchen Kombination die vollständige Bearbeitung des Werkstücks zu bewerkstelligen, werden die Bahnsegmente der unterschiedlichen Bereiche, bzw. deren Hüllkonturen, lückenlos aneinander angefügt.

Der Erfindung liegt die Erkenntnis zugrunde, dass bei einem derartigen Vorgehen die Bearbeitung in Verbindungsabschnitten, also etwa in einem Abschnitt, in dem ein steiler und ein flacher Bereich des Werkstücks ineinander übergehen oder aneinander angrenzen, unter großem Materialeingriff stattfindet, da das Werkzeug in einen noch unvollständig bearbeiteten Bereich einfährt. Wird beispielsweise zunächst ein steiler Bereich mittels einer ebenenbasierten Strategie bearbeitet, bevor eine projektionsbasierte Bearbeitung eines angrenzenden flachen Bereichs erfolgt, ist am Boden des Verbindungsabschnitts noch viel Material vorhanden, wenn das Werkzeug dort das Ende einer ebenenbasierten Bearbeitungszeile erreicht. Auch beruht die Erfindung auf der Erkenntnis, dass in Verbindungsabschnitten oftmals nur wenig Platz zur Verfügung steht, weshalb kurze und/oder stark gekrümmte Abfahrsegmente verwendet werden müssen, was zu abrupten Bewegungen des Werkzeugs führen kann. Beides kann zu Vibrationen, einer großen Umschlingung des Werkzeugs und der Bildung von Bearbeitungsmarken führen, was eine verringerte Oberflächenqualität mit sich bringen kann. Auch liegt der Erfindung die Erkenntnis zugrunde, dass eine ähnliche Situation auftreten kann, wenn Verbindungssegmente zwischen Bearbeitungszeilen abgefahren werden, die sich nahe eines Verbindungsabschnitts befinden. Auch in diesem Fall kann der Platz unter Umständen nicht ausreichen, um hinreichend sanft gekrümmte Bahnsegmente zu erzeugen, entlang derer das Werkzeug kontrolliert abgehoben werden kann. Hieraus kann sich ebenfalls eine verringerte Qualität ergeben. Generell können bei beengten Platzverhältnissen Genauigkeitsfehler einer Maschine deutlicher zum Tragen kommen.

DE 10 2016 117 932 A1 offenbart ein Verfahren zur materialabtragenden Bearbeitung von Verrundungsflächen eines Werkstücks mittels eines Fräswerkzeugs mit konisch-konvex ausgebildeter Schneidenkontur. Die Bearbeitung der Verrundungsfläche erfolgt, indem das Werkzeug entlang einer Längsrichtung der

Verrundungsfläche und in einem Winkel zu dieser geneigt geführt wird, sodass ein im Wesentlichen sichelförmiger Materialeingriff ausgebildet wird.

Ausgehend vom Stand der Technik liegt der vorliegenden Erfindung daher die Aufgabe zugrunde, ein verbessertes Verfahren zur Bearbeitung von Werkstücken anzugeben, die Werkstückabschnitte aufweisen, die mit unterschiedlichen Bearbeitungsstrategien zu bearbeiten sind. Insbesondere liegt der Erfindung die Aufgabe zugrunde, eine Oberflächenqualität zu erhöhen und/oder die Belastung für Werkzeug und/oder Maschine zu verringern.

Diese Aufgabe wird erfindungsgemäß durch ein Verfahren mit den Merkmalen des Anspruchs 1, ein Computerprogramm mit den Merkmalen des Anspruchs 11, ein Computerprogrammprodukt mit den Merkmalen des Anspruchs 12 und ein Verfahren mit den Merkmalen des Anspruchs 13 gelöst.

Es wird ein Verfahren zum Bestimmen einer Werkzeugbahn für eine materialabtragende Bearbeitung eines Werkstücks in einer Bearbeitungsmaschine durch Bewegen eines Werkzeugs entlang der Werkzeugbahn vorgeschlagen. Die Bearbeitungsmaschine kann eine CNC-Maschine und/oder eine drei-, vier- oder fünfachsige Maschine sein. Bei dem Werkzeug handelt es sich in einigen Ausführungsformen um ein Fräswerkzeug.

Das Werkstück umfasst einen ersten Werkstückabschnitt und einen an den ersten Werkstückabschnitt angrenzenden zweiten Werkstückabschnitt. Der erste Werkstückabschnitt und der zweite Werkstückabschnitt können räumlich unterschiedlich orientiert sein. Sie können sich alternativ oder zusätzlich auch durch zumindest eine Randbedingung unterscheiden, wie beispielsweise ein Vorhandensein oder Fehlen weiterer angrenzender Flächen und/oder Objekte, eine Materialbeschaffenheit, eine gewünschte Bearbeitungsstrategie etc. Die Werkzeugbahn umfasst einen ersten Bahnbereich zur Bearbeitung des ersten Werkstückabschnitts, der Bahnsegmente umfasst, die mittels einer ersten Anpassungsstrategie an eine Geometrie des ersten Werkstückabschnitts angepasst sind. Die Werkzeugbahn umfasst einen zweiten Bahnbereich zur Bearbeitung des zweiten Werkstückabschnitts, der Bahnsegmente umfasst, die mittels einer zweiten Anpassungsstrategie an eine Geometrie des zweiten Werkstückabschnitts angepasst sind, die sich von der ersten Anpassungsstrategie unterscheidet.

Das Verfahren umfasst ein Bestimmen des ersten Bahnbereichs derart, dass die Bahnsegmente des ersten Bahnbereichs den ersten Werkstückabschnitt bis auf einen ersten Randbereich abdecken, der gezielt von den Bahnsegmenten des ersten Bahnbereichs ausgespart wird, obwohl an den ersten Randbereich mittels der ersten Anpassungsstrategie Bahnsegmente anpassbar wären. Anders ausgedrückt umfasst das Verfahren ein Bestimmen des ersten Bahnbereichs derart, dass die Bahnsegmente des ersten Bahnbereichs eine Bearbeitung des ersten Werkstückabschnitts bis auf den ersten Randbereich bewirken und/oder definieren. Der erste Randbereich kann insbesondere unmittelbar an den zweiten Werkstückabschnitt angrenzen.

Des Weiteren umfasst das Verfahren ein Bestimmen des zweiten Bahnbereichs derart, dass die Bahnsegmente des zweiten Bahnbereichs den zweiten Werkstückabschnitt bis auf einen zweiten Randbereich abdecken, der gezielt von den Bahnsegmenten des zweiten Bahnbereichs ausgespart wird, obwohl an den zweiten Randbereich mittels der zweiten Anpassungsstrategie Bahnsegmente anpassbar wären. Anders ausgedrückt umfasst das Verfahren ein Bestimmen des zweiten Bahnbereichs derart, dass die Bahnsegmente des zweiten Bahnbereichs eine Bearbeitung des zweiten Werkstückabschnitts bis auf den zweiten Randbereich bewirken und/oder definieren. Der zweite Randbereich kann insbesondere unmittelbar an den ersten Werkstückabschnitt und/oder an den ersten Randbereich angrenzen.

Außerdem umfasst das Verfahren ein Bestimmen eines Übergangsbereichs der Werkzeugbahn, der Bahnsegmente umfasst, die zumindest den ersten Randbereich und den zweiten Randbereich abdecken, wobei die Bahnsegmente des ersten Bahnbereichs, des zweiten Bahnbereichs und des Übergangsbereichs gemeinsam den ersten Werkstückabschnitt und den zweiten Werkstückabschnitt vollständig abdecken. Anders ausgedrückt umfasst das Verfahren ein Bestimmen eines Übergangsbereichs der Werkzeugbahn, der Bahnsegmente umfasst, die eine Bearbeitung des ersten Randbereichs und des zweiten Randbereichs bewirken und/oder definieren.

Die erfindungsgemäßen Merkmale erlauben es, ein verbessertes Verfahren zur Bearbeitung von Werkstücken zu erzielen, die Werkstückabschnitte aufweisen, die mit unterschiedlichen Strategien zu bearbeiten sind. Hierdurch kann eine Oberflächenqualität verbessert werden. Außerdem kann eine Belastung für das Werkzeug und/oder die verwendete Maschine verringert werden. Durch das erfindungsgemäße Aussparen der Randbereiche und das gezielte Bestimmen eines Übergangsbereichs kann ein übermäßig starker Materialeingriff beim Erreichen des Übergangsbereichs vermieden werden. Ein vom Übergangsbereich abgedeckte Verbindungsabschnitt des Werkstücks kann daher schonend und mit hoher Qualität herausgearbeitet werden. Es kann ausreichend Platz geschaffen werden, um sanft gekrümmte bzw. hinsichtlich einer Bearbeitungsqualität optimierte An-/Abfahrsegmenten zu erzeugen. Somit kann die gewünschte Bauteilgeometrie fehlerfrei und vollständig erzeugt werden, ohne dass insbesondere im Übergangsbereich Bearbeitungsfehler auftreten.

Das Verfahren unterscheidet sich von Restmaterialbearbeitungsverfahren insbesondere durch die gezielte Aussparung von Randbereichen. Der Übergangsbereich ist beispielsweise kein Restmaterialbearbeitungsbereich und/oder dient nicht der Bearbeitung eines Restmaterialabschnitts.

Es versteht sich, dass die hierin genannten Verfahrensschritte in der Reihenfolge durchlaufen werden, in der sie genannt sind, beispielsweise in der Reihenfolge, wie sie in den Ansprüchen aufgeführt sind.

Die Bahnsegmente des Übergangsbereichs können an eine Geometrie des Werkstücks, etwa an eine Geometrie eines Verbindungsabschnitts des Werkstücks, mittels einer dritten Anpassungsstrategie angepasst sein, die sich von der ersten Anpassungsstrategie und/oder der zweiten Anpassungsstrategie unterscheidet.

Die Werkzeugbahn kann insbesondere mittels einer Software und/oder eines Computersystems erzeugt werden, die/das unabhängig von der Bearbeitungsmaschine benutzbar ist. Hierbei kann beispielsweise ein CAM-System zum Einsatz kommen. Das Verfahren kann die Erstellung von NC-Code als Steuerbefehle zur Ansteuerung von Maschinenachsen einer Bearbeitungsmaschine umfassen, insbesondere im Rahmen eines Postprocessings.

Es versteht sich, dass beliebige spanende Bearbeitungsmaschinen und entsprechend beliebige Werkzeuge von der Erfindung umfasst sind. Die Bearbeitung kann eine spanende Bearbeitung sein. Die Bearbeitung kann ein Fräsen, ein Bohren, ein Schleifen etc. sowie entsprechend geeignete Werkzeuge umfassen.

Die Werkzeugbahn ist insbesondere eine Bahn, entlang derer ein definierter Punkt des Werkzeugs und/oder einer Werkzeugkontur des Werkzeugs bewegt wird. Dabei kann es sich beispielsweise um einen Mittelpunkt, einen Kontaktpunkt, einen bestimmten Punkt auf einer Werkzeugschneide und/oder einen bestimmten Punkt auf einer Werkzeugachse handeln.

Die beiden Werkstückabschnitte grenzen insbesondere unmittelbar aneinander an. Der erste Werkstückabschnitt und der zweite Werkstückabschnitt sind gemäß einigen Ausführungsformen räumlich erheblich unterschiedlich orientiert. Dies kann bedeuten, dass eine Flächennormalen des ersten Werkstückabschnitts und eine Flächennormalen des zweiten Werkstückabschnitts einen Winkel einschließen, der wenigstens 10°, wenigstens 20°, wenigstens 30°, wenigstens 45° oder sogar wenigstens 60° beträgt. Bei den genannten Flächennormalen kann es sich um mittlere Flächennormalen des jeweiligen Werkstückabschnitt handeln, um eine beliebige Flächennormalen in einem Punkt des jeweiligen Werkstückabschnitts und/oder um eine Flächennormalen an einem charakteristischen Punkt des jeweiligen Werkstückabschnitts wie beispielsweise an seinem Schwerpunkt, Sattelpunkt, Wendepunkt, Extrempunkt, Mittelpunkt etc. Hiervon kann auch umfasst sein, dass die Werkstückabschnitte beispielsweise über eine Verrundungsfläche ineinander übergehen. Flächennormale entlang einer Grenzlinie zwischen den Werkstückabschnitten können dann einander entsprechen. Flächennormale in Mittelpunkten und/oder an charakteristischen Punkten, insbesondere jeweils außerhalb der Verrundungsfläche, können hingegen wie beschrieben deutlich unterschiedlich orientiert sein. Der erste Werkstückabschnitt kann eine vollständige Werkstückfläche des Werkstücks sein und insofern an allen Seiten an jeweils eine andere, vom ersten Werkstückabschnitt unterscheidbare und geometrisch abgesetzte andere Werkstückfläche angrenzen. Selbiges kann alternativ oder zusätzlich für den zweiten Werkstückabschnitt gelten. Anders ausgedrückt kann der erste Werkstückabschnitt eine erste Werkstückfläche und/oder der zweite Werkstückabschnitt eine zweite Werkstückfläche sein. Ein Werkstückabschnitt könnte zudem auch aus mehreren Flächen und/oder Flächenteilen bestehen. In anderen Ausführungsformen kann der erste Werkstückabschnitt und/oder der zweite Werkstückabschnitt ein Flächenabschnitt einer größeren Fläche sein. Zudem können die beiden Werkstückabschnitte Teil einer gemeinsamen Fläche sein und stetig und/oder tangentenstetig und/oder krümmungsstetig ineinander übergehen.

Erfindungsgemäß ist die erste Anpassungsstrategie eine ebenenbasierte Anpassungsstrategie. Erfindungsgemäß ist die zweite Anpassungsstrategie eine projektionsbasierte Anpassungsstrategie. Die erste Anpassungsstrategie und die zweite Anpassungsstrategie können sich grundlegend voneinander unterscheiden, d. h. beispielsweise nicht durch eine Wahl von Vorfaktoren, Randbedingungen, Parameterbereichen etc. ineinander überführbar sein. Die erste Anpassungsstrategie liefert Bahnsegmente, die ebenenbasiert sind, sodass eine Bearbeitung im ersten Bahnbereich ebenenweise erfolgt, und die zweite Anpassungsstrategie liefert Bahnsegmente, die projektionsbasiert sind, sodass der zweite Bahnbereich auf einer Projektion eines Bahnmusters auf den zweiten Werkstückabschnitt beruht. Die erwähnte Anpassung an die Geometrie des jeweiligen Werkstückabschnitts umfasst in einigen Ausführungsformen ein Definieren der betreffenden Bahnsegmente derart, dass diese der Geometrie des jeweiligen Werkstückabschnitts folgen und dessen vollständige Bearbeitung in dem abgedeckten Bereich bewirken und/oder definieren. Die Anpassungsstrategien können auch in der Weise unterschiedlich sein, dass abweichende Werkzeuganstellungen verwendet werden, insbesondere obwohl die Bahnsegmente mit der gleichen Methode berechnet werden.

Der erste Randbereich und der zweite Randbereich können erfindungsgemäß derart gewählt sein, dass sie (Teil-)Abschnitte des Werkstücks abdecken, die durch Ausdehnung des ersten Bahnbereichs und/oder des zweiten Bahnbereichs bearbeitbar wären. Es findet insbesondere eine bewusste/gezielte/absichtliche Aussparung der Randbereiche statt, die grundsätzlich vermieden werden könnte. Der Übergangsbereich kann einen Übergangsabschnitt/Verbindungsabschnitt des Werkstücks abdecken, innerhalb dessen die beiden Werkstückabschnitte aneinander angrenzen und/oder ineinander übergehen. Die Bahnsegmente des Übergangsbereichs definieren und/oder bewirken dabei insbesondere eine Bearbeitung des Werkstücks in diesem Übergangsabschnitt/Verbindungsabschnitt.

Erfindungsgemäß ist der erste Werkstückabschnitt bezüglich einer räumlichen Achse ein steiler Abschnitt, dessen Flächennormale(n) um mehr als einen ersten Grenzwinkel gegenüber der räumlichen Achse geneigt ist/sind. Erfindungsgemäß ist der zweite Werkstückabschnitt ein flacher Abschnitt, dessen Flächennormale(n) um weniger als einen zweiten Grenzwinkel gegenüber der räumlichen Achse geneigt ist/sind. Bei der Flächennormalen bzw. den Flächennormalen handelt es sich um (eine) Flächennormale in Kontaktpunkten und/oder Berührpunkten des Werkzeugs. Der erste Grenzwinkel und der zweite Grenzwinkel können dabei identisch sein, sodass lediglich ein einzelner Grenzwinkel verwendet wird. Es können aber auch unterschiedliche Grenzwinkel verwendet werden. Im Regelfall ist einer der Werkstückabschnitt ein steiler Abschnitt und der andere Werkstückabschnitt zudem ein flacher Abschnitt. Das Verfahren kann somit insbesondere auf die eingangs skizzierte Bearbeitungssituationen angewendet werden, bei denen ein Werkstück bearbeitet werden soll, das erheblich unterschiedlich orientierte Werkstückabschnitt aufweist, die sich als flach bzw. steil beschreiben lassen.

In einer Weiterbildung umfasst das Verfahren ferner ein Vergleichen zumindest eines geometrischen Parameters, insbesondere eines Radius, des Werkzeugs mit einem geometrischen Parameter, insbesondere einem Krümmungsradius, der einen Verbindungsabschnitt des ersten Werkstückabschnitts und des zweiten Werkstückabschnitts beschreibt. Der geometrische Parameter des Werkzeugs kann auch ein Krümmungsradius einer Schneide des Werkzeugs sein. Dies kann sich auf einen beliebigen gekrümmten Abschnitt der Schneide beziehen, beispielsweise einen Eckradius bei einem Radiusfräser, eine kurze und/oder lange Halbachse eines elliptischen Schneidenabschnitts, einen Krümmungsradius eines ausgebeulten Bereichs eines konisch-konvexen Werkzeugs etc. Der Verbindungsabschnitt kann von dem ersten Werkstückabschnitt und/oder dem zweiten Werkstückabschnitt ausgebildet sein. Insbesondere können die beiden Werkstückabschnitte lückenlos aneinander angrenzen. Der Verbindungsabschnitt ist dann ein Abschnitt, in dem die beiden Werkstückabschnitte ineinander übergehen und/oder ein Nahbereich einer Grenzlinie zwischen den Werkstückabschnitten. Anders ausgedrückt kann auf diese Weise anhand eines geeigneten Grenzwerts und/oder einer geeigneten Benutzervorgabe automatisiert bestimmt werden, ob die Werkstückabschnitte nach Maßgabe einer erfindungsgemäß bestimmten Werkzeugbahn bearbeitet werden sollen. Das Vergleichen kann auf einem Schwellenwert beruhen. Der Schwellenwert kann von einem Benutzer vorgebbar sein. Ein hoher Grad an Effizienz kann insbesondere dann erzielt werden, wenn das Vergleichen dem Ermitteln dient, ob das Aussparen der Randbereiche und/oder das Bestimmen des Übergangsbereichs durchgeführt werden sollen oder nicht. Ist beispielsweise der Werkzeugradius und/oder ein Radius einer Krümmung einer Schneide des Werkzeugs oder ein anderer geometrischer Parameter des Werkzeugs, insbesondere erheblich, etwa um ein Vielfaches, kleiner, als der Krümmungsradius des Verbindungsabschnitts, kann es zweckmäßig sein, eine Bearbeitung ohne gezielte Aussparung der Randbereiche durchzuführen. Ein Abfahren des Verbindungsabschnitts mit dem Werkzeug führt dann unter Umständen nicht zu Qualitätseinbußen. Hierfür kann beispielsweise ein Faktor von wenigstens 1,5, wenigstens 2, wenigstens 3 oder wenigstens 5 vorgesehen sein, ebenso wie zusätzlich oder alternativ ein von einem Benutzer vorgebbarer Faktor. Ist hingegen der Krümmungsradius des Verbindungsabschnitts ähnlich groß wie oder sogar kleiner als der geometrische Parameter des Werkzeugs, kann eine Bearbeitung über den Verbindungsabschnitt hinweg nicht ohne Weiteres durchgeführt werden. Die oben beschriebene Strategie einer gezielten Aussparung von Randbereichen für unterschiedliche Bahnbereiche sowie das Bestimmen einer Übergangsbereichs kann dann zweckmäßig sein.

Der Raum, der durch die Auslassung der Randbereiche gewonnen wird, kann besonders zweckmäßig bei der Erzeugung von Werkzeugbahnen ausgenutzt werden, die zu einer hohen Oberflächengüte und/oder einer schonenden Bearbeitung führen, wenn das Verfahren ferner ein Bestimmen von Verbindungssegmenten und/oder Anfahrsegmenten und/oder Abfahrsegmenten, die zumindest abschnittsweise im Übergangsbereich umfasst sind, für den ersten Bahnbereich und/oder für den zweiten Bahnbereich umfasst. Die Verbindungssegmenten und/oder Anfahrsegmenten und/oder Abfahrsegmenten sind insbesondere Teil des jeweiligen Bahnbereichs. Anders ausgedrückt können erforderliche Werkzeugbewegungen in den Übergangsbereich hinein gestattet sein, wenn eine Bearbeitung des Werkstücks in Abschnitten erfolgt, die von dem ersten Bahnbereich und/oder dem zweiten Bahnbereich abgedeckt sind. Die Verbindungssegmenten und/oder Anfahrsegmenten und/oder Abfahrsegmenten können zumindest teilweise den Verbindungsabschnitt abdecken und/oder in diesen hineinreichen und/oder diesen überlagern.

Der Übergangsbereich wird beim Bewegen des Werkzeugs entlang der Werkzeugbahn insbesondere nach dem ersten Bahnbereich und dem zweiten Bahnbereich erreicht. In anderen Worten erfolgt zuerst eine Bearbeitung im ersten und zweiten Bahnbereich, ehe eine Bearbeitung im Übergangsbereich stattfindet. Hierdurch kann der Übergangsbereich auch einer Nachbearbeitung bzw. einem Verschleifen von Grenzbereichen der beiden Bahnbereiche dienen.

Gemäß einer Weiterbildung kann vorgesehen sein, dass das Verfahren ferner ein Bestimmen des Übergangsbereichs derart umfasst, dass dessen Bahnsegmente zumindest abschnittsweise den ersten Bahnbereich und/oder der zweiten Bahnbereich überlappen. Hierdurch kann im Bereich von An- und Abfahrbewegungen bzw. Verbindungssegmenten zwischen Bearbeitungszeilen des ersten und des zweiten Bahnbereichs eine hohe Bearbeitungsqualität erzielt werden, indem ein sanfter Übergang erzeugt wird. Der Übergangsbereich kann somit neben einer Bearbeitung eines noch nicht bearbeiteten Verbindungsabschnitts auch eine Nachbearbeitung von Werkstückabschnitten bewirken, die bereits nach Maßgabe des ersten Bahnbereichs und/oder des zweiten Bahnbereichs bearbeitet wurden. Weiche Übergänge können dabei insbesondere dann erzielt werden, wenn die Bahnsegmente des Übergangsbereich derart bestimmt werden, dass sie dort, wo sie den ersten Bahnbereich und/oder den zweiten Bahnbereich überlappen, graduell vom Werkstück abgehoben sind. Der Übergangsbereich kann ein Verschleifen von Grenzbereichen derjenigen Werkstückabschnitte bewirken, die von dem ersten Bahnbereich und/oder dem zweiten Bahnbereich abgedeckt sind.

Eine besonders effiziente Bestimmung des Übergangsbereichs kann beispielsweise dann erzielt werden, wenn das Verfahren ferner ein Bestimmen des ersten Bahnbereichs durch Bestimmen von vorläufigen Bahnsegmenten, die insbesondere auf einer vollständigen Abdeckung des ersten Werkstückabschnitts anhand der ersten Anpassungsstrategie beruhen, und anschließendes Verkürzen der vorläufigen Bahnsegmente in dem ersten Randbereich umfasst. Alternativ oder zusätzlich umfasst das Verfahren ein Bestimmen des zweiten Bahnbereichs durch Bestimmen von vorläufigen Bahnsegmenten, die insbesondere auf einer vollständigen Abdeckung des zweiten Werkstückabschnitts anhand der zweiten Anpassungsstrategie beruhen, und anschließendes Verkürzen der vorläufigen Bahnsegmente in dem zweiten Randbereich. Das Verkürzen des vorläufigen Bahnsegments bzw. der vorläufigen Bahnsegmente kann auf zumindest einer Begrenzungskurve beruhen, die dem ersten Werkstückabschnitt und/oder dem zweiten Werkstückabschnitt überlagert wird. Das Verfahren kann demnach zunächst ein Anpassen von Bahnsegmenten an die Geometrie des betreffenden Werkstückabschnitts umfassen, wobei bei dieser Anpassung noch nicht berücksichtigt werden muss, dass ein Übergangsbereich bestimmt und Randbereiche ausgespart werden sollen. Die Anpassung kann somit unkompliziert und zuverlässig erfolgen. Das Verfahren kann anschließend ein gezieltes Aussparen der Randbereiche dadurch umfassen, dass die bereits bestimmten, die Werkstückabschnitte vollständig abdeckenden Bahnsegmente verändert werden, indem diese dort verkürzt und/oder beschnitten werden, wo die Werkstückabschnitte aneinandergrenzen. Hierdurch wird nach erfolgter Anpassung ein Abschnitt definiert, für den anschließend die Bahnsegmente des Übergangsbereichs definiert werden können. Wie erwähnt kann der Übergangsbereich überlappend gewählt sein, sodass Grenzen des ausgesparten Abschnitts nicht zwingend deckungsgleich mit Grenzen des Übergangsbereichs sein müssen. Die Begrenzungskurve kann unter Berücksichtigung einer Geometrie eines Verbindungsabschnitts und/oder einer Grenzlinie bestimmt werden, die zwischen den Werkstückabschnitten verläuft. Beispielsweise kann die Begrenzungskurve einen vorgegebenen Abstand von dem ersten Werkstückabschnitt und/oder dem zweiten Werkstückabschnitt definieren.

Gemäß einigen Ausführungsformen kann das Werkzeug einen tatsächlichen Werkzeugradius aufweisen, der beim Bestimmen der Werkzeugbahn berücksichtigt wird. In einigen Fällen kann zusätzlich das Bestimmen des Übergangsbereichs auf zumindest einem gegenüber dem tatsächlichen Werkzeugradius vergrößerten Werkzeugradius beruhen. Auch kann das Bestimmen der Randbereiche auf zumindest einem gegenüber dem tatsächlichen Werkzeugradius vergrößerten Werkzeugradius beruhen. Hierdurch können die Randbereiche und der Übergangsbereich einfach und zuverlässig bestimmt werden. Etwa im Fall mehrfach gekrümmter und/oder geometrisch komplexer Flächen und/oder Flächenverbünde kann somit das Verfahren mit einem hohen Grad an Automatisierung durchgeführt werden, weil die Ermittlung ausgesparter Bereiche anhand des vergrößerten Werkzeugradius robust für nahezu beliebige Werkstückgeometrien möglich ist. Die Vergrößerung kann um einen Faktor erfolgen, der wenigsten 1,1, wenigstens 1,2, wenigstens 1,5, wenigsten 2, wenigstens 3, wenigstens 5 oder einen noch größeren Wert beträgt. Das Bestimmen des Übergangsbereichs kann dahingehend auf dem vergrößerten Werkzeugradius beruhen, dass dieser einer Berechnung zugrunde gelegt wird, die die Ausdehnung des ersten Bahnbereichs und des zweiten Bahnbereichs definiert und/oder begrenzt. Durch die Verwendung des vergrößerten Werkzeugradius können somit diejenigen Abschnitte definiert sein, die durch den ersten Bahnbereich und den zweiten Bahnbereich bearbeitbar sind, im Speziellen ohne dass die genannten Problem einer zu großen Umschlingung, starken Vibrationen etc. auftreten. Hieraus können sich, etwa als verbleibender Bereich, der erste Randbereich und/oder der zweite Randbereich ergeben. Zudem kann sich hieraus der Übergangsbereich ergeben, wobei zu beachten ist, dass dieser dennoch überlappend ausgebildet sein kann.

Gemäß einer Weiterbildung werden Startpunkt und/oder Endpunkte von Bahnsegmenten des ersten Bahnbereichs bestimmt, die den ersten Randbereich definieren, indem unter Berücksichtigung des zumindest einen vergrößerten Werkzeugradius ermittelt wird, wie weit das Werkzeug bei einer Bearbeitung des ersten Werkstückabschnitts auf den zweiten Werkstückabschnitt zubewegt werden kann. Alternativ oder zusätzlich können Startpunkt und/oder Endpunkte von Bahnsegmenten des zweiten Bahnbereichs bestimmt werden, die den zweiten Randbereich definieren, indem unter Berücksichtigung des zumindest einen vergrößerten Werkzeugradius ermittelt wird, wie weit das Werkzeug bei einer Bearbeitung des zweiten Werkstückabschnitts auf den ersten Werkstückabschnitt zubewegt werden kann. Die Bestimmung des ersten Bahnbereichs und/oder des zweiten Bahnbereichs anhand des vergrößerten Werkzeugradius kann eine kollisionsvermeidende Annäherung an den entsprechend anderen Werkstückabschnitt umfassen. Insbesondere wird der vergrößerte Werkzeugradius nicht der Bestimmung eines Abstands zwischen Bahnsegmenten des betreffenden Bahnbereichs zugrunde gelegt. Da der hierbei verwendete Werkzeugradius größer als der tatsächliche Werkzeugradius ist, aber vorzugsweise lediglich der Annäherung an den entsprechend anderen Werkstückabschnitt, nicht aber der relativen Beabstandung von Bahnsegmenten zugrunde gelegt wird, ergibt sich ein ausgesparter Randbereich aber eine vollständige Abdeckung bzw. Bearbeitung im ersten Bahnbereich, wenn das Werkzeug mit dem tatsächlichen Radius verwendet wird.

Grundsätzlich ist zu beachten, dass eine Bezugnahme auf eine "Fläche" im Rahmen dieser Offenbarung nicht auf mathematische Flächen beschränkt sein soll. Eine "Fläche" kann hingegen auch beispielsweise eine Menge von Dreiecken oder anderen Polygonen in einem Dreiecksnetz oder einem Polygonnetz sein.

Die Erfindung betrifft des Weiteren ein Computerprogramm zum Durchführen eines erfindungsgemäßen Verfahrens. Das Computerprogramm umfasst insbesondere Programmcode, der die Durchführung der genannten Verfahrensschritte bewirkt, wenn dieser in einem Computer ausgeführt wird.

Die Erfindung betrifft außerdem ein Computerprogrammprodukt, das zumindest ein Speichermedium umfasst, auf dem Programmcode eines erfindungsgemäßen Computerprogramms gespeichert ist. Das Speichermedium kann einen flüchtigen und/oder einen nichtflüchtigen Datenspeicher umfassen.

Ferner betrifft die Erfindung ein Verfahren zur materialabtragenden Bearbeitung eines Werkstücks mittels eines Werkzeugs, insbesondere eines Fräswerkzeugs, das zur Bearbeitung, insbesondere in einer beispielsweise fünfachsigen CNC-Maschine, entlang einer Werkzeugbahn geführt wird, die in einem erfindungsgemäßen Verfahren und/oder mittels eines erfindungsgemäßen Computerprogramms und/oder mittels eines erfindungsgemäßen Computerprogrammprodukts bestimmt wurde.

Im Folgenden wird die vorliegende Erfindung anhand der beigefügten Figuren beispielhaft beschrieben. Es zeigen:
- Fig. 1: eine schematische Darstellung einer Bearbeitungsmaschine;
- Fig. 2: eine schematische perspektivische Darstellung eines Werkstücks;
- Fig. 3: eine weitere schematische perspektivische Darstellung des Werkstücks;
- Fig. 4: eine schematische perspektivische Darstellung des Werkstücks mit an einen ersten Werkstückabschnitt angepassten Bahnsegmenten;
- Fig. 5: eine schematische perspektivische Darstellung des Werkstücks mit an einen zweiten Werkstückabschnitt angepassten Bahnsegmenten;
- Fig. 6: eine schematische perspektivische Darstellung des Werkstücks mit an den ersten und den zweiten Werkstückabschnitt angepassten Bahnsegmenten;
- Fig. 7: eine schematische perspektivische Darstellung des Werkstücks mit an den ersten und den zweiten Werkstückabschnitt angepassten ersten und zweiten Bahnbereichen;
- Fig. 8: eine schematische perspektivische Darstellung des Werkstücks mit an den ersten und den zweiten Werkstückabschnitt angepassten ersten und zweiten Bahnbereichen und mit einem Übergangsbereich;
- Fig. 9: eine schematische Draufsicht auf einen Abschnitt des Werkstücks zur Veranschaulichung einer ersten Methode zur Ermittlung von ausgesparten Randbereichen;
- Fig. 10: eine schematische Draufsicht auf einen Abschnitt des Werkstücks zur Veranschaulichung einer zweiten Methode zur Ermittlung von ausgesparten Randbereichen;
- Fig. 11: eine schematische perspektivische Darstellung eines Abschnitts des Werkstücks mit einer angepassten Werkzeugbahn, die erste Abfahrsegmente umfasst;
- Fig. 12: eine schematische perspektivische Darstellung eines Abschnitts des Werkstücks mit einer angepassten Werkzeugbahn, die zweite Abfahrsegmente umfasst;
- Fig. 13: eine schematische Darstellung eines Abschnitts eines Werkstücks mit einer Werkzeugbahn, die einen Übergangsbereich aufweist, der mit Bahnbereichen überlappend gewählt ist;
- Fig. 14: eine schematische perspektivische Darstellung eines weiteren Werkstücks mit an einen ersten und einen zweiten Werkstückabschnitt angepassten ersten und zweiten Bahnbereichen;
- Fig. 15: eine schematische perspektivische Darstellung des weiteren Werkstücks mit einem an einen Verbindungsabschnitt angepassten Übergangsbereich;
- Fig. 16: eine schematische perspektivische Darstellung des weiteren Werkstücks mit an den ersten und den zweiten Werkstückabschnitt angepassten ersten und zweiten Bahnbereichen und mit dem Übergangsbereich;
- Fig. 17: eine schematische Darstellung eines ersten Verbindungsabschnitts eines Werkstücks;
- Fig. 18: eine schematische Darstellung eines zweiten Verbindungsabschnitts eines Werkstücks;
- Fig. 19: ein schematisches Ablaufdiagramm eines Verfahrens zum Bestimmen einer Bearbeitungsbahn; und
- Fig. 20: ein schematisches Ablaufdiagramm eines Verfahrens zur materialabtragenden Bearbeitung eines Werkstücks.

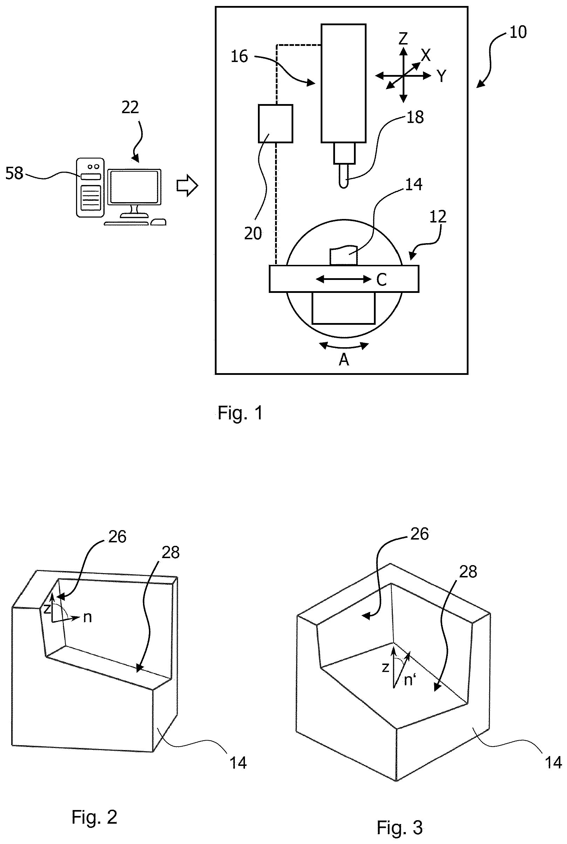

Für die folgende Beschreibung wird auf die in Fig. 1 schematisch dargestellte Bearbeitungsmaschine 10 Bezug genommen. Diese ist rein beispielhaft zu verstehen, insbesondere was ihre bewegbaren Achsen angeht. Es können in anderen Ausführungsformen andere Maschinenachsen und/oder eine andere Anzahl von Maschinenachsen vorgesehen sein.

Die Bearbeitungsmaschine 10 umfasst einen Werkstücktisch 12, auf dem ein Werkstück 14 anordenbar bzw. befestigbar ist. Das Werkstück 14 kann mittels der Bearbeitungsmaschine 10 spanend bearbeitet werden. Im exemplarisch gezeigten Fall handelt es sich um eine Fräsmaschine.

Die Bearbeitungsmaschine 10 umfasst zudem eine Bearbeitungseinheit 16 mit einem Werkzeug 18 zur Bearbeitung des Werkstücks 14. Die Bearbeitungseinheit 16 umfasst im dargestellten Fall beispielsweise eine Werkzeugspindel. Das Werkzeug 18 ist im beispielhaft dargestellten Fall ein Fräswerkzeug, insbesondere ein Kugelfräser. Eine Bearbeitung erfolgt, indem das Werkzeug 18 entlang einer Werkzeugbahn geführt wird. Diese wird weiter unten genauer Beschrieben. Entlang der Werkzeugbahn befindet sich das Werkzeug 18 zumindest zeitweise in Eingriff mit abzutragendem Material des Werkstücks 14, wodurch eine Zielgeometrie des Werkstücks 14 herausgearbeitet wird.

Die Bearbeitungsmaschine 10 ist mehrachsig bzw. N-achsig, beispielhaft 5-achsig. Zur Veranschaulichung definiert beispielsweise der Werkstücktisch 12 zwei Drehachsen A, C und die Bearbeitungseinheit 16 drei Linearachsen X, Y, Z. Andere Konfigurationen sind jedoch ebenso möglich.

Die Bearbeitungsmaschine 10 umfasst ferner eine Steuereinheit 20, die Steuerbefehle an die N unterschiedlichen Maschinenachsen ausgeben kann. Die Bearbeitungsmaschine 10 ist insbesondere eine CNC-Maschine, und die Steuerbefehle können entsprechend NC-Befehle sein.

Ferner ist ein CAM-System 22 vorgesehen. Dieses ist in vielen Ausführungsformen nicht Teil der Bearbeitungsmaschine 10, sondern kann maschinenunabhängig arbeiten. Mittels des CAM-Systems 22 kann anhand von CAD-Daten des Werkstücks 14 bzw. dessen Zielgeometrie eine Bearbeitungsbahn erzeugt werden, aus denen in einem Postprocessing in grundsätzlich bekannter Weise Steuerbefehle für die Bearbeitungsmaschine 10 bzw. deren Steuereinheit 20 erzeugt werden können.

Ein beispielhaftes Computerprogrammprodukt kann ein Speichermedium 58 umfassen, dass etwa Teil eines Computers des CAM-Systems 22 und/oder mit einem solchen verwendbar ist. Auf dem Speichermedium kann Programmcode eines Computerprogramms gespeichert sein, das Anweisungen enthält, die beim Ausführen auf einem Computer die Durchführung des im Folgenden beschriebenen Verfahrens zum Bestimmen einer Werkzeugbahn für eine materialabtragende Bearbeitung des Werkstücks 14 bewirken.

Die Figuren 2 und 3 zeigen schematische perspektivische Ansichten eines Werkstücks 14. Das Werkstück 14 weist mehrere Flächen und/oder Werkstückabschnitte auf, die räumlich unterschiedlich orientiert sind. Im Folgenden beachtenswert sind vor allem ein erster Werkstückabschnitt 26 und ein zweiter Werkstückabschnitt 28, die unmittelbar aneinander angrenzen. Zur einfacheren Nachvollziehbarkeit sind die Werkstückabschnitte 26, 28 als ebene Flächen dargestellt. Es versteht sich jedoch, dass die Werkstückabschnitte 26, 28 gekrümmt sein können und/oder mehrere Teilflächen umfassen können. Beispielhaft umfasst der erste Werkstückabschnitt 26 zwei ebene Flächen, die etwa über eine innenliegende Kante und/oder einen innenliegenden Verbindungsabschnitt miteinander verbunden sind. Für die nachfolgende Beschreibung könnte jedoch alternativ auch lediglich eine dieser Flächen als erster Werkstückabschnitt 20 betrachtet werden.

Der erste Werkstückabschnitt 26 ist bezüglich einer räumlichen Achse z ein steiler Abschnitt. Eine Flächennormale n des ersten Werkstückabschnitts 26 schließt einen großen Winkel mit der räumlichen Achse z ein. Alternativ oder zusätzlich könnte in diesem Beispiel auch eine Flächennormale auf der anderen Teilfläche des Werkstückabschnitts 26 berücksichtigt werden. Der zweite Werkstückabschnitt 28 ist bezüglich der räumlichen Achse z ein flacher Abschnitt. Seine Flächennormale n' schließt mit der räumlichen Achse z einen kleinen Winkel ein. Zur Kategorisierung von Flächen als steil oder flach kann ein Grenzwinkel verwendet werden, beispielsweise ein Winkel von 30°. Im dargestellten Fall ist entsprechend die Flächennormale n des ersten Werkstückabschnitts 26 um mehr als den Grenzwinkel geneigt, wohingegen die Flächennormale n' des zweiten Werkstückabschnitts 28 um weniger als den Grenzwinkel geneigt ist. Wie oben erläutert wurde, können auch zwei unterschiedliche Grenzwinkel verwendet werden.

Falls Werkstückabschnitte betrachtet werden, die sich von ebenen Flächen unterscheiden, kann zur Kategorisierung eine Flächennormale für jeden Kontaktpunkt/Berührpunkt des Werkzeugs 18 mit dem Werkstück 14 betrachtet werden. Im dargestellten Fall mit den ebenen Werkstückabschnitten 26, 28 sind diese Flächennormalen über den betreffenden Werkstückabschnitt 26, 28 hinweg konstant.

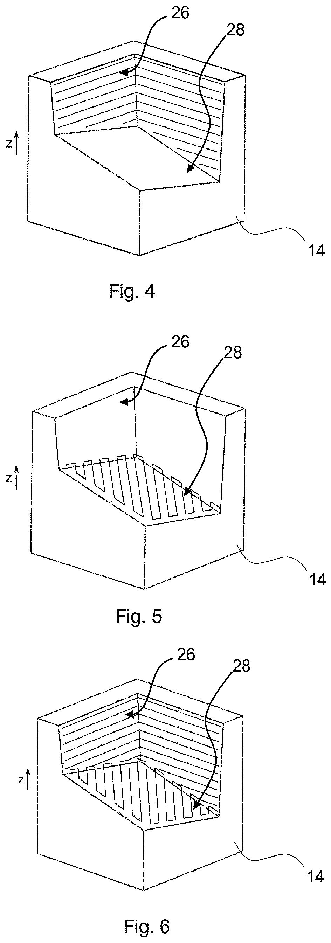

Die Figuren 4 bis 6 veranschaulichen eine herkömmliche Anpassung einer Werkzeugbahn an eine Geometrie des Werkstücks 14 in einem Bereich der beiden Werkstückabschnitte 26, 28. Wie in Fig. 4 zu erkennen ist, wird eine ebenenweise Anpassung an steile Werkstückabschnitte durchgeführt. Die sich ergebenden Bahnsegmente, die als durchgezogene Linien dargestellt sind, erstrecken sich soweit wie möglich bis an die Ränder der steilen Werkstückabschnitte. Wie ferner in Fig. 5 dargestellt ist, wird für flache Werkstückabschnitte eine projektionsbasierte Anpassung verwendet. Auch die hieraus erhaltenen Bahnsegmente erstrecken sich so weit wie möglich bis an den Rand der betreffenden Werkstückabschnitte. Somit ergibt sich insgesamt die in Fig. 6 dargestellte Werkzeugbahn, die den ersten Werkstückabschnitt 26 und den zweiten Werkstückabschnitt 28 abdeckt. Die erhaltenen Bahnsegmente erstrecken sich dabei bis unmittelbar an eine innenliegende Kante und/oder einen konkaven Bereich zwischen den Werkstückabschnitten 26, 28, wobei "unmittelbar" in diesem Zusammenhang eine Annäherung im Rahmen dessen beschreibt, was nach Maßgabe des Fräserradius möglich ist. Dort kann es bei einer Werkzeugbewegung entlang von Verbindungssegmenten und/oder beim Anfahren und/oder Abfahren von Bahnsegmenten, insbesondere auch entlang der eigentlichen Bahnsegmente, zu einer großen Umschlingung des Werkzeugs 18 bzw. einem großen Materialeingriff kommen, was mit den oben erläuterten Qualitätsproblemen einhergehen kann.

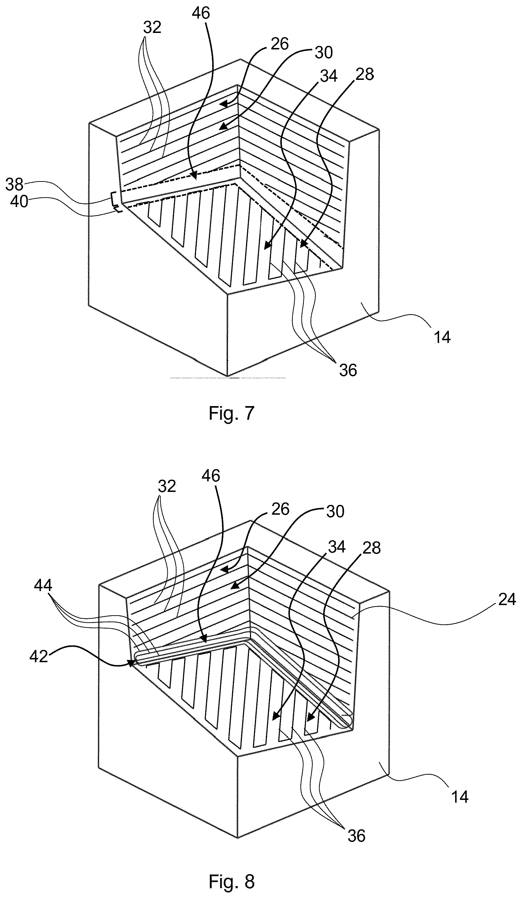

Demgegenüber wird in den Figuren 7 und 8 das Ergebnis eines hierin beschriebenen Verfahrens dargestellt. Eine mittels dieses Verfahrens bestimmte Werkzeugbahn 24 umfasst einen ersten Bahnbereich 30 zur Bearbeitung des ersten Werkstückabschnitts 26. Bahnsegmente 32 des ersten Bahnbereichs 30, von denen lediglich einige mit Bezugszeichen versehen sind, sind mittels einer ebenenbasierten Methode an den ersten Werkstückabschnitt 26 angepasst. Ferner umfasst die Werkzeugbahn 24 einen zweiten Bahnbereich 34 zur Bearbeitung des zweiten Werkstückabschnitts 28, der Bahnsegmente 36 umfasst, von denen ebenfalls lediglich einige mit Bezugszeichen versehen sind. Diese sind mittels einer projektionsbasierten Methode an den zweiten Werkstückabschnitt 28 angepasst.

Wie oben erwähnt wurde, können sich die Anpassungsstrategien in anderen Ausführungsformen auch dadurch unterscheiden, dass abweichende Werkzeuganstellungen verwendet werden, insbesondere obwohl die Bahnsegmente mit der gleichen Methode berechnet werden.

Wie in Fig. 7 beispielhaft dargestellt ist, sieht das Verfahren vor, dass die Bahnbereiche 30, 34 derart bestimmt werden, dass der jeweilige Werkstückabschnitt 26, 28 in einem ersten Randbereich 38 bzw. einem zweiten Randbereich 40 nicht von Bahnsegmenten 32, 30 abgedeckt wird, obwohl an die Randbereiche 38, 40 unter Verwendung der jeweiligen Anpassungsstrategie Bahnsegmente grundsätzlich anpassbar wären. In einem Verbindungsabschnitt 46 der beiden Werkstückabschnitte 26, 28 befinden sich somit keine Bahnsegmente des ersten Bahnbereichs 30 oder des zweiten Bahnbereichs 34. Es wird somit insbesondere der Bereich ausgespart, in dem andernfalls ein große Materialeingriff erfolgen würde, wie dies oben anhand der Figuren 4 bis 6 erläutert wurde.

Das Verfahren sieht ferner vor, dass ein Übergangsbereich 42 der Werkzeugbahn 24 bestimmt wird, der die Randbereiche 38, 40 abdeckt, sodass der Übergangsbereich 42 und die beiden Bahnbereiche 30, 34 bzw. deren jeweilige Bahnsegmente 32, 36, 44 den ersten Werkstückabschnitt 26 und den zweiten Werkstückabschnitt 28 vollständig abdecken.

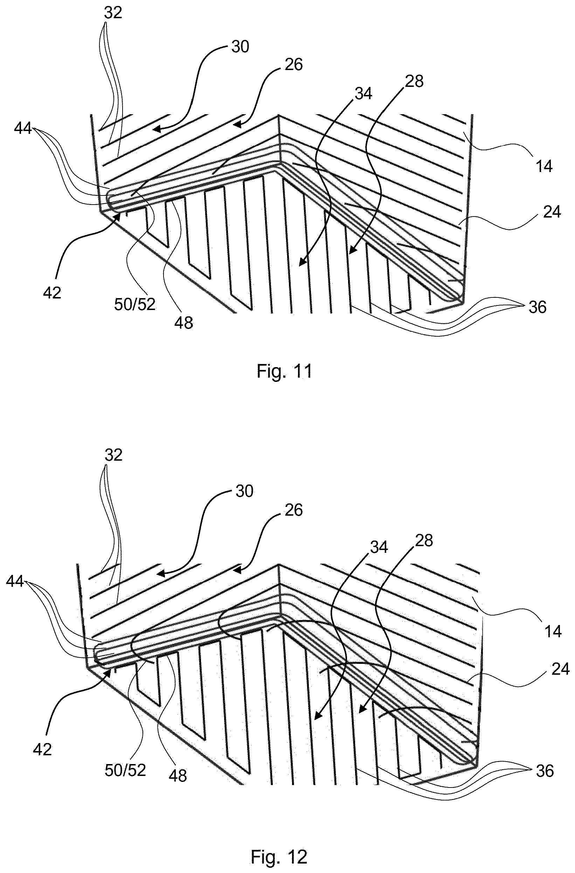

Im beispielhaft dargestellten Fall wird eine Spiralstrategie im Übergangsbereich 42 gewählt. Aufgrund der spiralförmigen Füllbahn des Übergangsbereichs 42 sind keine An-/Abfahrbewegungen innerhalb des Übergangsbereichs notwendig. Im dargestellten Fall verlaufen die Bahnsegmente 44 des Übergangsbereichs 42 von außen nach innen, wobei auch eine Bearbeitung in die umgekehrte Richtung möglich ist. Der Übergangsbereich 42 kann aber auch mittels anderer Anpassungsstrategien bestimmt werden, wobei insbesondere eine andere Anpassungsstrategien zum Einsatz kommt als für den ersten Bahnbereich 30 und den zweiten Bahnbereich 34. Auf die Bahnsegmente 44 des Übergangsbereich 42 wird im Zusammenhang mit den Figuren 11 und 12 weiter unten nochmals eingegangen.

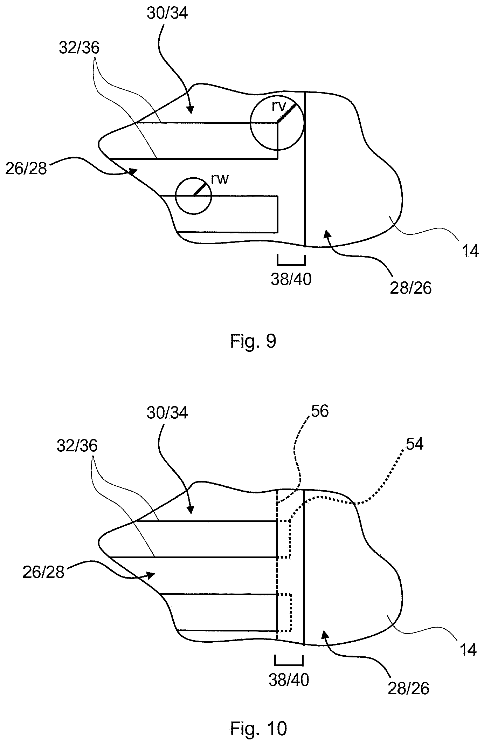

Um die Randbereiche 38, 40 zu bestimmen, können unterschiedliche Strategien verwendet werden. Eine erste mögliche Strategie ist in Fig. 9 veranschaulicht. Es versteht sich, dass das beschriebene Vorgehen sowohl für den ersten Randbereich 38 als auch für den zweiten Randbereich 40 verwendet werden kann, bzw. für den ersten Werkstückabschnitt 26 und/oder für den zweiten Werkstückabschnitt 28. Dies ist auch durch die doppelte Verwendung von Bezugszeichen in Fig. 9 verdeutlicht.

Der Bestimmung der Bahnsegmente 32/36 des entsprechenden Bahnbereichs 30/34 wird diesem Ansatz zufolge grundsätzlich ein tatsächlicher Radius rw des Werkzeugs 18 zugrunde gelegt. Um den Randbereich 38/40 zu ermitteln, wird ein Startpunkt und/oder ein Endpunkt eines bestimmten Bahnsegments 32/36 hingegen durch Zugrunde legen eines vergrößerten Werkzeugradius rv ermittelt. Dieser kann beispielsweise um einen Faktor 1,5, einen Faktor 2, einen Faktor 3 oder einen beliebigen anderen Faktor größer sein als der tatsächliche Radius rw. Indem der vergrößerte Radius rv verwendet wird, ist der Startpunkt und/oder der Endpunkt eines Bahnsegments 32/36 weiter von einem Rand des betreffenden Werkstückabschnitt 26/28 entfernt als dies ausgehend vom tatsächlichen Werkzeugradius rw erforderlich wäre und/oder sich dies nach Maßgabe des tatsächlichen Werkzeugradius rw ergeben würde. Dies ergibt sich aus einer einfachen Kollisionsprüfung des der Berechnung zugrunde gelegten vergrößerten Werkzeugs mit dem angrenzenden Werkstückabschnitt 28/26. Indem sämtliche Bahnsegmente 32/36 des betreffenden Bahnbereichs 30/34 nach Maßgabe des vergrößerten Werkzeugradius rv bestimmt werden, ergibt sich ein insgesamt ausgesparter Randbereich 38/40, wie ihn das Verfahren vorsieht.

Ein alternatives Vorgehen ist in Fig. 10 dargestellt. Hierbei werden Bahnsegmente 32/36 zunächst für den gesamten Werkstückabschnitt 26/28 basierend auf dem tatsächlichen Werkzeugradius rw ermittelt, also bis zu dessen Rändern. Auf diese Weise werden vorläufige Bahnsegmente 54 erhalten. Ausgehend von diesen vorläufigen Bahnsegmenten 54 wird eine Begrenzungskurve 56 verwendet, die dem betreffenden Werkstückabschnitt 26/28 überlagert wird. Nach Maßgabe dieser Begrenzungskurve 56 werden die vorläufigen Bahnsegmente 54 verkürzt, um die endgültigen Bahnsegmente 32/36 zu erhalten. Die Begrenzungskurve 56 kann beispielsweise parallel zu einer Oberfläche des angrenzenden Werkstückabschnitts 28/26 und/oder parallel zu einem Rand des betrachteten Werkstückabschnitts 26/28 und/oder in einem vorgegebenen Abstand davon verlaufen und gegebenenfalls auch einem nichtlinearen Verlauf folgen. Auch auf diese Weise kann ein ausgesparter Randbereich 38/40 erhalten werden.

Gemäß noch einer weiteren Alternative werden die Bahnsegmente 32/36 von Anfang an nur bis zu einem bestimmten Abstand bezüglich eines Rands des betreffenden Werkstückabschnitts 26/28bestimmt, d.h. ohne Verwendung einer Begrenzungskurve, sondern durch Prüfung berechneter Abstandswerte von Bahnsegmentpunkten.

Die Figuren 11 und 12 zeigen vergrößerte Ausschnitte des Werkstücks 14. Der Übergangsbereich 42 ist exemplarisch derart gewählt, dass seine Bahnsegmente 44 an die Bahnsegmente 32, 36 des ersten Bahnbereichs 30 und des zweiten Bahnbereichs 34 angrenzen und dabei An- und Abfahrsegmente überlappen. Die Werkzeugbahn 24 sieht dabei vor, dass der Übergangsbereich 42 als letztes vom Werkzeug 18 angefahren wird. Aufgrund des Raums, der durch die gezielte Aussparung der Randbereiche 38, 40 gewonnen wird, können vergleichsweise ausladende Bewegungen durchgeführt werden, um etwa den Bahnbereich 30 anzufahren oder davon abzufahren. Beispielsweise können An-/Abfahrsegmente mit einer lediglich leichten Krümmung eingesetzt werden, wie dies in Fig. 11 veranschaulicht ist, oder lange, kreisbogenförmige Bahnsegmente, wie dies in Fig. 12 veranschaulicht ist. Hieraus ergeben sich sanfte Werkzeugbewegungen, wodurch Maschinenungenauigkeiten weniger ins Gewicht fallen, Fräsmarken verhindert und ein unerwünscht großer Materialeingriff vermieden werden kann. In den dargestellten Fällen werden gerade Verbindungssegmente zwischen den Bahnsegmenten 36 verwendet. In anderen Ausführungsformen können kurvenförmige Verbindungssegmente verwendet werden, die sanfte Bewegungen definieren und/oder entlang derer ein zwischenzeitlichen Abheben erfolgen kann.

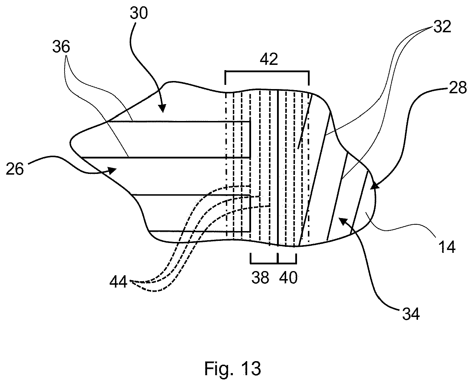

Fig. 13 veranschaulicht eine weitere Abwandlung, bei der die (gestrichelt dargestellten) Bahnsegmente 44 des Übergangsbereichs 42 (veranschaulicht durch strichpunktierte Linien) die Bahnsegmente 32, 36 des ersten Bahnbereichs 30 und des zweiten Bahnbereichs 34 überlappt. Wie zu erkennen ist, ragt der Übergangsbereich 42 somit über die Randbereiche 38, 40 hinaus. Zudem können die Bahnsegmente 44 des Übergangsbereichs 42 derart gewählt sein, dass diese zum Rand des Übergangsbereichs 42 hin graduell vom Werkstück 14 abgehoben sind. Im dargestellten Fall erfolgt das Abheben außerhalb der Randbereiche 38, 40. Der Übergangsbereich 42 ermöglicht somit ein Verschleifen im Randbereich des Übergangsbereichs 42, wodurch bei der Bearbeitung nach Maßgabe des ersten Bahnbereichs 30 und/oder des zweiten Bahnbereichs 34 entstandene Marken im Material entfernt/verschliffen werden können.

Die Werkzeugbahn 24 kann vorsehen, dass der Übergangsbereich 42 als letztes vom Werkzeug 18 angefahren wird. Der Übergangsbereich 42 ermöglicht somit ein Verschleifen im Randbereich des Übergangsbereichs 42, wodurch bei der Bearbeitung nach Maßgabe des ersten Bahnbereichs 30 und/oder des zweiten Bahnbereichs 34 entstandene Marken im Material entfernt/verschliffen werden können.

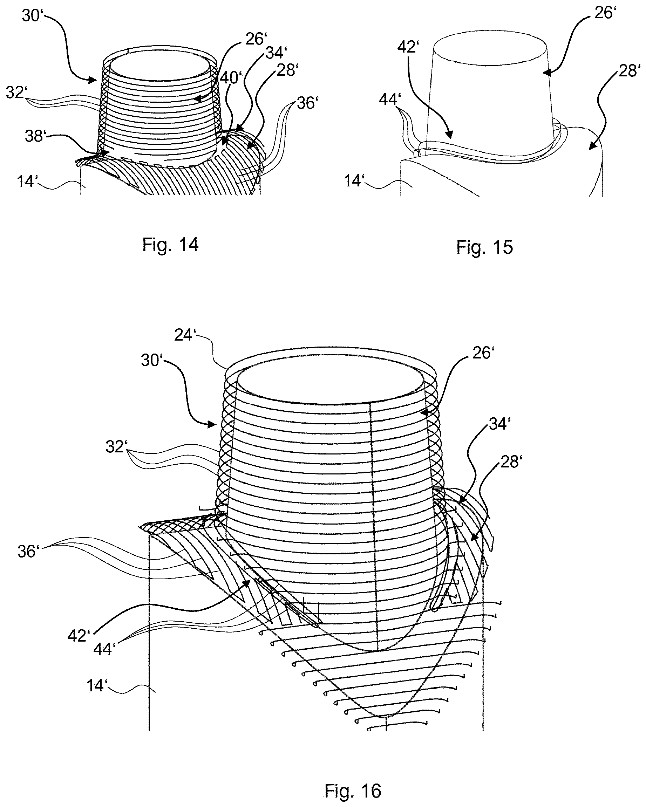

In den Figuren 14 bis 16 ist eine weitere Bearbeitungssituation für ein anderes Werkstück 14' dargestellt. Für ein einfaches Verständnis werden dieselben Bezugszeichen wie oben verwendet, wobei diese in den Figuren 14 bis 16 jeweils mit einem Hochkomma versehen sind. Grundsätzlich kann auf die obige Beschreibung der entsprechenden Objekte/Elemente verwiesen werden.

Das weitere Werkstück 14' umfasst einen ersten Werkstückabschnitt 26', der einen konischen Abschnitt des Werkstücks 14' sowie einen steilen Teilbereich eines unterhalb des konischen Abschnitts angeordneten sattelförmigen Abschnitts des weiteren Werkstücks 14' umfasst. Ferner umfasst das weitere Werkstück 14' einen zweiten Werkstückabschnitt 28', der einen flachen Teilbereich des sattelförmigen Abschnitts umfasst. Die Werkstückabschnitte 26', 28' können wie oben beschrieben durch Vergleich mit einem Grenzwinkel erhalten werden. In Fig. 16 ist gut zu erkennen, wie sich anhand einer solchen Kategorisierung eine Grenze zwischen den Werkstückabschnitten 26', 28' ergibt, die sich innerhalb einer zusammenhängenden Fläche des Werkstücks 14' befindet.

Analog zum oben beschriebenen Beispiel werden ein erster Bahnbereich 30' und ein zweiter Bahnbereich 34' bestimmt, indem Randbereiche 38', 40' gezielt ausgespart und unterschiedliche Anpassungsstrategien verwendet werden. Ein Übergangsbereich 42' wird bestimmt, sodass die Bahnsegmente 32', 36', 44' der Bahnbereiche 30', 34' und des Übergangsbereichs 42' gemeinsam die beiden Werkstückabschnitte 28', 30' vollständig abdecken bzw. deren vollständige Bearbeitung definieren/bewirken. Wie in Fig. 16 zu erkennen ist, sind die spiralförmigen Füllbahnen des Übergangsbereichs 42' an einer Rückseite des Werkstücks 14' nicht vollständig umlaufend, da der steile erste Werkstückabschnitt 26' durchgängig von oben nach unten verläuft.

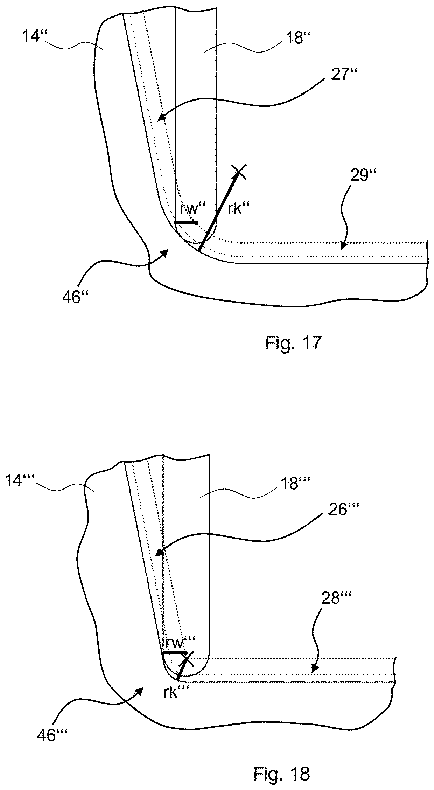

Je nach Anwendungsfall kann es zweckmäßig sein, das beschriebene Vorgehen lediglich dann anzuwenden, wenn die Werkstückgeometrie Flächen und Übergänge definiert, die andernfalls nur schwer mit hinreichender Qualität bearbeitet werden könnten. Dies ist anhand der Figuren 17 und 18 veranschaulicht. Der Einfachheit halber werden darin wieder die oben für entsprechende Objekte verwendeten Bezugszeichen herangezogen, wobei diese zur Unterscheidung mit zwei oder drei Hochkommata versehen sind. Die durchgezogene Linie veranschaulicht jeweils die Werkstückkontur, die gepunktete Linie ein noch abzutragendes Material, und die gestrichelte Linie eine Fräsbahn, auf der sich das Werkzeug bewegt. Im beispielhaft dargestellten Fall eines Kugelfräsers bewegt sich ein Kugelzentrum des Werkzeugs auf dieser Fräsbahn.

Das Werkstück 14" gemäß Fig. 17 umfasst einen Verbindungsabschnitt 46" zwischen Abschnitten 27", 29" einer Werkstückfläche. Der Verbindungsabschnitt 46" ist konkav gekrümmt und weist einen Krümmungsradius rk" auf, der erheblich größer ist als ein Radius rw" des Werkzeugs 18". Es ist daher ohne Weiteres möglich, das Werkstück ohne die Verwendung eines Übergangsbereichs zu bearbeiten, ohne dass sich Bearbeitungsmarken in einem Bereich des Verbindungsabschnitts 46" bilden. Erkennbar ist die Umschlingung des Werkzeugs 18" akzeptabel.

Demgegenüber weist das Werkstück 14‴ gemäß Fig. 18 einen Verbindungsabschnitt 46‴ mit einer deutlich stärkeren Krümmung auf, die durch einen Krümmungsradius rk‴ beschrieben werden kann, der in etwa einem Werkzeugradius rw‴ entspricht. Eine Umschlingung des Werkzeugs 18‴ in einem Bereich des Verbindungsabschnitts 46‴ wäre sehr groß, erkennbar an dem großen Eingriff in das Material (vgl. gepunktete Linie). Der resultierende große Materialeingriff könnte zu einer reduzierten Bearbeitungsqualität führen.

Das Verfahren kann daher ein Vergleichen eines geometrischen Parameters des Werkzeugs 18"/18‴ mit einem geometrischen Parameter des Werkstücks 14"/14"', vorliegend des Verbindungsabschnitts 46"/46"', umfassen. Im beispielhaft dargestellten Fall wird ein Krümmungsradius des Verbindungsabschnitts 46"/46‴ mit dem Werkzeugradius rw"/rw‴ verglichen. Zweckmäßigerweise wird dabei auch ein von einem Benutzer vorgegebener Schwellenwert berücksichtigt, der beispielsweise einen Vorfaktor für den Vergleich darstellt. Ist der Krümmungsradius kleiner als oder gleich groß wie der Schwellenwert multipliziert mit dem Werkzeugradius rw"/rw‴, wird geschlussfolgert, dass eine der Fig. 18 entsprechende Situation vorliegt und das Festlegen eines Übergangsbereichs geboten ist. Hierbei kommt die oben beschriebene gezielte Freilassung von Randbereichen und die Überlagerung eines Übergangsbereichs ins Spiel. Beispielweise kann der Benutzer vorgeben, dass das Verfahren eingesetzt wird, falls der Krümmungsradius rw" des Verbindungsabschnitts 46" kleiner ist als der doppelte oder anderthalbfache Werkzeugradius rw".

Andernfalls kann auf das Festlegen eines Übergangsbereichs verzichtet werden (vergleiche beispielsweise den Fall gemäß Fig. 17). Die betrachteten geometrischen Parameter unterscheiden sich dann so erheblich, dass keine Qualitätsprobleme bei der Bearbeitung zu erwarten sind.

Wird anstelle eines Kugelfräsers ein Radiusfräser oder ein beliebiges anderes Werkzeug mit einer gekrümmten Schneide verwendet, kann anstelle des Werkzeugradius oder zusätzlich dazu der beschriebene Vergleich auf der Grundlage eines geometrischen Parameters durchgeführt werden, der die Schneide des Werkzeugs beschreibt.

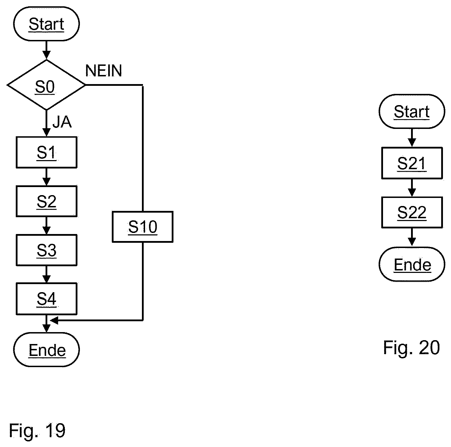

Ein schematisches Ablaufdiagramm eines Verfahrens zum Bestimmen einer Werkzeugbahn für eine materialabgetragene Bearbeitung eines Werkstücks ist in Fig. 19 dargestellt. Als optionalen Schritt S0 kann das Verfahren ein Vergleichen eines geometrischen Parameters des Werkstücks mit einem geometrischen Parameter des Werkzeugs umfassen, wie dies oben beispielhaft anhand der Figuren 16 und 17 beschrieben wurde. Ergibt das Vergleichen, dass ein Festlegen eines Übergangsbereichs nicht erforderlich ist, erfolgt in einem Schritt S10 eine Bearbeitung des Werkstücks über einen vorhandenen Verbindungsabschnitt hinweg. Ergibt das Vergleichen hingegen, dass eine Unterteilung des Werkstücks zweckmäßig ist, wird das Verfahren mit der gezielten Aussparung der Randbereiche durchgeführt.

In einem Schritt S1 kann ein Bestimmen unterschiedlicher Werkstückabschnitte durchgeführt werden. Dies kann beispielsweise anhand des beschriebenen Vergleichs von Flächennormalen mit einem erfolgen.

In einem Schritt S2 wird ein erster Bahnbereich einer Werkzeugbahn derart bestimmt, dass Bahnsegmente des ersten Bahnbereichs einen ersten Werkstückabschnitt bis auf einen ersten Randbereich abdecken.

In einem Schritt S3 wird ein zweiter Bahnbereich der Werkzeugbahn derart bestimmt, dass Bahnsegmente des zweiten Bahnbereichs einen zweiten Werkstückabschnitt bis auf einen zweiten Randbereich abdecken.

In einem Schritt S4 wird ein Übergangsbereich der Werkzeugbahn bestimmt, der den ersten Randbereich und den zweiten Randbereich abdeckt, wobei Bahnsegmente des Übergangsbereichs gemeinsam mit den Bahnsegmenten des ersten und des zweiten Bahnbereichs die Werkstückabschnitt vollständig abdecken.

Wie oben beschrieben, können die Schritte S2 und/oder S3 ein Verkürzen vorläufiger Bahnsegmente und/oder ein Bestimmen von Bahnsegmenten umfassen, die auf der Berücksichtigung eines gegenüber eines tatsächlichen Werkzeugradius vergrößerten Werkzeugradius beruhen.

Die in einem solchen Verfahren bestimmte Werkzeugbahn kann in einem Verfahren verwendet werden, das durch das schematische Ablaufdiagramm der Fig. 20 veranschaulicht ist. In einem Schritt S21 wird eine Bearbeitungsbahn bestimmt. Dies geschieht in einem Verfahren gemäß Fig. 19. In einem Schritt S22 wird ein Werkstück mittels eines Werkzeugs bearbeitet, das zur Bearbeitung entlang der bestimmten Werkzeugbahn geführt wird.

## Patentansprüche

1. Verfahren zum Bestimmen einer Werkzeugbahn (24) für eine materialabtragende Bearbeitung eines Werkstücks (14) in einer Bearbeitungsmaschine (10), insbesondere in einer beispielsweise fünfachsigen CNC-Maschine, durch Bewegen eines Werkzeugs (18), insbesondere eines Fräswerkzeugs, entlang der Werkzeugbahn (24),
wobei das Werkstück (14) einen ersten Werkstückabschnitt (26) und einen an den ersten Werkstückabschnitt (26) angrenzenden zweiten Werkstückabschnitt (28) umfasst,
wobei die Werkzeugbahn (24) einen ersten Bahnbereich (30) zur Bearbeitung des ersten Werkstückabschnitts (26) umfasst, der Bahnsegmente (32) umfasst, die mittels einer ersten Anpassungsstrategie an eine Geometrie des ersten Werkstückabschnitts (26) angepasst sind, und
wobei die Werkzeugbahn (24) einen zweiten Bahnbereich (34) zur Bearbeitung des zweiten Werkstückabschnitts (28) umfasst, der Bahnsegmente (36) umfasst, die mittels einer zweiten Anpassungsstrategie an eine Geometrie des zweiten Werkstückabschnitts (28) angepasst sind, die sich von der ersten Anpassungsstrategie unterscheidet,
umfassend:
Bestimmen des ersten Bahnbereichs (30) derart, dass die Bahnsegmente (32) des ersten Bahnbereichs (30) den ersten Werkstückabschnitt (26) bis auf einen ersten Randbereich (38) abdecken, der gezielt von den Bahnsegmenten (32) des ersten Bahnbereichs (30) ausgespart wird, obwohl an den ersten Randbereich (38) mittels der ersten Anpassungsstrategie Bahnsegmente anpassbar wären;
Bestimmen des zweiten Bahnbereichs (34) derart, dass die Bahnsegmente (36) des zweiten Bahnbereichs (34) den zweiten Werkstückabschnitt (26) bis auf einen zweiten Randbereich (40) abdecken, der gezielt von den Bahnsegmenten (36) des zweiten Bahnbereichs (34) ausgespart wird, obwohl an den zweiten Randbereich (40) mittels der zweiten Anpassungsstrategie Bahnsegmente anpassbar wären; und
Bestimmen eines Übergangsbereichs (42) der Werkzeugbahn (24), der Bahnsegmente (44) umfasst, die den ersten Randbereich (38) und den zweiten Randbereich (40) abdecken, wobei die Bahnsegmente (32, 36, 44) des ersten Bahnbereichs (30), des zweiten Bahnbereichs (34) und des Übergangsbereichs (42) gemeinsam den ersten Werkstückabschnitt (26) und den zweiten Werkstückabschnitt (28) vollständig abdecken,
wobei der erste Werkstückabschnitt (24) bezüglich einer räumlichen Achse (z) ein steiler Abschnitt ist, dessen Flächennormalen (n) in Kontaktpunkten und/oder Berührpunkten des Werkzeugs (18) um mehr als einen ersten Grenzwinkel gegenüber der räumlichen Achse (z) geneigt sind, und der zweite Werkstückabschnitt (28) ein flacher Abschnitt ist, dessen Flächennormalen (n') in Kontaktpunkten und/oder Berührpunkten des Werkzeugs (18) um weniger als einen zweiten Grenzwinkel gegenüber der räumlichen Achse (z) geneigt sind,
**dadurch gekennzeichnet, dass**
die erste Anpassungsstrategie Bahnsegmente liefert, die ebenenbasiert sind, sodass eine Bearbeitung im ersten Bahnbereich (30) ebenenweise erfolgt, und
die zweite Anpassungsstrategie Bahnsegmente liefert, die projektionsbasiert sind, sodass der zweite Bahnbereich (34) auf einer Projektion eines Bahnmusters auf den zweiten Werkstückabschnitt (28) beruht.

2. Verfahren nach Anspruch 1,
ferner umfassend ein Vergleichen zumindest eines geometrischen Parameters, insbesondere eines Radius (rw), des Werkzeugs mit einem geometrischen Parameter, insbesondere einem Krümmungsradius (rk), der einen Verbindungsabschnitt (46) des ersten Werkstückabschnitts (26) und des zweiten Werkstückabschnitts (28) beschreibt, wobei der Vergleich insbesondere auf zumindest einem Schwellenwert beruht, der von einem Benutzer vorgebbar ist.

3. Verfahren nach einem der vorhergehenden Ansprüche, ferner umfassend:
Bestimmen von Verbindungssegmenten (48) und/oder Anfahrsegmenten (50) und/oder Abfahrsegmenten (52), die zumindest abschnittsweise im Übergangsbereich (42) umfasst sind, für den ersten Bahnbereich (30) und/oder für den zweiten Bahnbereich (34).

4. Verfahren nach einem der vorhergehenden Ansprüche,
wobei der Übergangsbereich (42) beim Bewegen des Werkzeugs (18) entlang der Werkzeugbahn (24) nach dem ersten Bahnbereich (30) und dem zweiten Bahnbereich (34) erreicht wird.

5. Verfahren nach einem der vorhergehenden Ansprüche, ferner umfassend:
Bestimmen des Übergangsbereichs (42) derart, dass dessen Bahnsegmente (44) zumindest abschnittsweise den ersten Bahnbereich (30) und/oder der zweiten Bahnbereich (34) überlappen, wobei die Bahnsegmente (44) des Übergangsbereichs (42) insbesondere derart bestimmt werden, dass sie dort, wo sie den ersten Bahnbereich (30) und/oder den zweiten Bahnbereich (32) überlappen, graduell vom Werkstück (14) abgehoben sind.

6. Verfahren nach einem der vorhergehenden Ansprüche, ferner umfassend:
Bestimmen der Bahnsegmente (44) des Übergangsbereichs (42) derart, dass diese eine spiralförmige Füllbahn für den Übergangsbereich (42) beschreiben.

7. Verfahren nach einem der vorhergehenden Ansprüche, ferner umfassend:
Bestimmen des ersten Bahnbereichs (30) durch Bestimmen von vorläufigen Bahnsegmenten (54), die auf einer vollständigen Abdeckung des ersten Werkstückabschnitts (26) anhand der ersten Anpassungsstrategie beruhen, und anschließendes Verkürzen der vorläufigen Bahnsegmente (54) in dem ersten Randbereich (38); und/oder
Bestimmen des zweiten Bahnbereichs (34) durch Bestimmen von vorläufigen Bahnsegmenten (54), die auf einer vollständigen Abdeckung des zweiten Werkstückabschnitts (28) anhand der zweiten Anpassungsstrategie beruhen, und anschließendes Verkürzen der vorläufigen Bahnsegmente (54) in dem zweiten Randbereich (40).

8. Verfahren nach Anspruch 7,
wobei das Verkürzen der vorläufigen Bahnsegmente (54) auf zumindest einer Begrenzungskurve (56) beruht, die dem ersten Werkstückabschnitt (26) und/oder dem zweiten Werkstückabschnitt (28) überlagert wird.

9. Verfahren nach einem der vorhergehenden Ansprüche,
wobei das Werkzeug (18) einen tatsächlichen Werkzeugradius (rw) aufweist, der beim Bestimmen der Werkzeugbahn (24) berücksichtigt wird, und
wobei das Bestimmen des Übergangsbereichs (42) auf zumindest einem gegenüber dem tatsächlichen Werkzeugradius (rw) vergrößerten Werkzeugradius (rv) beruht.

10. Verfahren nach Anspruch 9,
wobei Startpunkte und/oder Endpunkte von Bahnsegmenten (32) des ersten Bahnbereichs (30) bestimmt werden, die den ersten Randbereich (38) definieren, indem unter Berücksichtigung des zumindest einen vergrößerten Werkzeugradius (rv) ermittelt wird, wie weit das Werkzeug (18) bei einer Bearbeitung des ersten Werkstückabschnitts (26) auf den zweiten Werkstückabschnitt (28) zubewegt werden kann; und/oder
wobei Startpunkte und/oder Endpunkte von Bahnsegmenten (36) des zweiten Bahnbereichs (34) bestimmt werden, die den zweiten Randbereich (40) definieren, indem unter Berücksichtigung des zumindest einen vergrößerten Werkzeugradius (rv) ermittelt wird, wie weit das Werkzeug (18) bei einer Bearbeitung des zweiten Werkstückabschnitts (28) auf den ersten Werkstückabschnitt (26) zubewegt werden kann.

11. Computerprogramm, eingerichtet zum Durchführen eines Verfahrens nach einem der vorhergehenden Ansprüche.

12. Computerprogrammprodukt, umfassend zumindest ein Speichermedium (58), auf dem Programmcode eines Computerprogramms nach Anspruch 11 gespeichert ist.

13. Verfahren zur materialabtragenden Bearbeitung eines Werkstücks (14) mittels eines Werkzeugs (18), das zur Bearbeitung entlang einer Werkzeugbahn (24) geführt wird, die in einem Verfahren nach einem der Ansprüche 1 bis 10 bestimmt wurde.

## Claims

1. A method for determining a tool path (24) for material-removing machining of a workpiece (14) in a machine tool (10), in particular in, for example, a five-axis CNC machine, by moving a tool (18), in particular a milling tool, along the tool path (24),
wherein the workpiece (14) comprises a first workpiece portion (26) and a second workpiece portion (28) adjacent to the first workpiece portion (26),
wherein the tool path (24) comprises a first path section (30) for machining the first workpiece portion (26), comprising path segments (32) adapted to a geometry of the first workpiece portion (26) by means of a first adaptation strategy, and
wherein the tool path (24) comprises a second path section (34) for machining the second workpiece portion (28), comprising path segments (36) adapted to a geometry of the second workpiece portion (28) by means of a second adaptation strategy that is different from the first adaptation strategy,
comprising:
determining the first path section (30) in such a way that the path segments (32) of the first path section (30) cover the first workpiece portion (26) except for a first edge section (38) that is specifically omitted by the path segments (32) of the first path section (30) although path segments would be adaptable to the first edge section (38) by means of the first adaptation strategy;
determining the second path section (34) in such a way that the path segments (36) of the second path section (34) cover the second workpiece portion (26) except for a second edge section (40) that is specifically omitted by the path segments (36) of the second path section (34) although path segments would be adaptable to the second edge section (40) by means of the second adaptation strategy; and
determining a transition section (42) of the tool path (24), comprising path segments (44) covering the first edge section (38) and the second edge section (40), wherein the path segments (32, 36, 44) of the first path section (30), the second path section (34) and the transition section (42) collectively cover the entire first workpiece portion (26) and the entire second workpiece portion (28),
wherein the first workpiece portion (24) is a steep portion relative to a spatial axis (z), the surface normals (n) of which are inclined by more than a first critical angle relative to the spatial axis (z) at contact points and/or touch points of the tool (18), and the second workpiece portion (28) is a flat portion, the surface normals (n') of which are inclined by less than a second critical angle relative to the spatial axis (z) at contact points and/or touch points of the tool (18),
**characterized in that** the first adaptation strategy provides path segments that are plane-based such that machining in the first path section (30) is performed plane by plane, and the second adaptation strategy provides path segments that are projection-based such that the second path section (34) is based on a projection of a path pattern onto the second workpiece portion (28).

2. The method of claim 1,
further comprising comparing at least one geometrical parameter, in particular a radius (rw), of the tool with a geometrical parameter, in particular a curvature radius (rk), describing a connecting portion (46) of the first workpiece portion (26) and of the second workpiece portion (28), wherein the comparison is based in particular on at least one threshold value that can be set by a user.

3. The method of any one of the preceding claims, further comprising:
determining connecting segments (48) and/or approach segments (50) and/or move-along segments (52) that are at least partially included in the transition section (42) for the first path section (30) and/or for the second path section (34).

4. The method of any one of the preceding claims,
wherein the transition section (42) is reached after the first path section (30) and the second path section (34) when the tool (18) is moved along the tool path (24).

5. The method of any one of the preceding claims, further comprising:
determining the transition section (42) in such a way that its path segments (44) at least partially overlap the first path section (30) and/or the second path section (34), wherein the path segments (44) of the transition section (42) are determined in particular in such a way that they are gradually lifted from the workpiece (14) where they overlap the first path section (30) and/or the second path section (32).

6. The method of any one of the preceding claims, further comprising:
determining the path segments (44) of the transition section (42) in such a way that they describe a spiral filling path for the transition section (42).

7. The method of any one of the preceding claims, further comprising:
determining the first path section (30) by determining preliminary path segments (54) based on coverage of the entire first workpiece portion (26) using the first adaptation strategy and subsequent shortening the preliminary path segments (54) in the first edge section (38); and/or
determining the second path section (34) by determining preliminary path segments (54) based on coverage of the entire second workpiece portion (28) using the second adaptation strategy and subsequent shortening the preliminary path segments (54) in the second edge section (40).

8. The method of claim 7,
wherein the shortening of the preliminary path segments (54) is based on at least one boundary curve (56) that is superimposed on the first workpiece portion (26) and/or the second workpiece portion (28).

9. The method of any one of the preceding claims,
wherein the tool (18) has an actual tool radius (rw) that is taken into account when determining the tool path (24), and
wherein the determination of the transition section (42) is based on at least one tool radius (rv) that is larger than the actual tool radius (rw).

10. The method of claim 9,
wherein starting points and/or end points of path segments (32) of the first path section (30) defining the first edge section (38) are determined by determining how far the tool (18) can be moved towards the second workpiece portion (28) during machining of the first workpiece portion (26), taking into account the at least one increased tool radius (rv); and/or
wherein starting points and/or end points of path segments (36) of the second path section (34) defining the second edge section (40) are determined by determining how far the tool (18) can be moved towards the first workpiece portion (26) during machining of the second workpiece portion (28), taking into account the at least one increased tool radius (rv).

11. A computer program configured to implement a method of any one of the preceding claims.

12. A computer program product comprising at least one storage medium (58) on which program code of a computer program of claim 11 is stored.

13. A method for material-removing machining of a workpiece (14) using a tool (18) that is guided for machining along a tool path (24) determined using a method of any one of claims 1 to 10.

## Revendications

1. Procédé pour déterminer une trajectoire d'outil (24) pour un usinage par enlèvement de matière d'une pièce (14) dans une machine d'usinage (10), par exemple en particulier dans une machine à commande numérique à cinq axes, par déplacement d'un outil (18), en particulier d'un outil de fraisage, le long de la trajectoire d'outil (24),
dans lequel la pièce (14) comprend une première partie de pièce (26) et une deuxième partie de pièce (28) adjacente à la première partie de pièce (26),
dans lequel la trajectoire d'outil (24) comprend une première zone de trajectoire (30) pour l'usinage de la première partie de pièce (26), qui comprend des segments de trajectoire (32) qui sont adaptés à une géométrie de la première partie de pièce (26) au moyen d'une première stratégie d'adaptation, et
dans lequel la trajectoire d'outil (24) comprend une deuxième zone de trajectoire (34) pour l'usinage de la deuxième partie de pièce (28), qui comprend des segments de trajectoire (36) qui sont adaptés à une géométrie de la deuxième partie de pièce (28) au moyen d'une deuxième stratégie d'adaptation, qui diffère de la première stratégie d'adaptation,
comprenant :
la détermination de la première zone de trajectoire (30) de telle sorte que les segments de trajectoire (32) de la première zone de trajectoire (30) couvrent la première partie de pièce (26) à l'exception d'une première zone de bord (38) qui est délibérément épargnée par les segments de trajectoire (32) de la première zone de trajectoire (30), bien que des segments de trajectoire pourraient être adaptés à la première zone de bord (38) au moyen de la première stratégie d'adaptation ;
la détermination de la deuxième zone de trajectoire (34) de telle sorte que les segments de trajectoire (36) de la deuxième zone de trajectoire (34) couvrent la deuxième partie de pièce (26) à l'exception d'une deuxième zone de bord (40) qui est délibérément épargnée par les segments de trajectoire (36) de la deuxième zone de trajectoire (34), bien que des segments de trajectoire pourraient être adaptés à la deuxième zone de bord (40) au moyen de la deuxième stratégie d'adaptation ; et
la détermination d'une zone de transition (42) de la trajectoire d'outil (24), qui comprend des segments de trajectoire (44) qui couvrent la première zone de bord (38) et la deuxième zone de bord (40), les segments de trajectoire (32, 36, 44) de la première zone de trajectoire (30), de la deuxième zone de trajectoire (34) et de la zone de transition (42) couvrant ensemble complètement la première partie de pièce (26) et la deuxième partie de pièce (28),
dans lequel la première partie de pièce (24) est, par rapport à un axe spatial (z), une partie raide dont les normales à la surface (n) sont inclinées, en des points de contact et/ou des points de toucher de l'outil (18), de plus d'un premier angle limite par rapport à l'axe spatial (z), et la deuxième partie de pièce (28) est une partie plate dont les normales à la surface (n') sont inclinées, en des points de contact et/ou des points de toucher de l'outil (18), de moins d'un deuxième angle limite par rapport à l'axe spatial (z),
**caractérisé en ce que** la première stratégie d'adaptation fournit des segments de trajectoire basés sur des plans, de sorte qu'un usinage dans la première zone de trajectoire (30) s'effectue plan par plan, et
**en ce que** la deuxième stratégie d'adaptation fournit des segments de trajectoire qui sont basés sur une projection, de sorte que la deuxième zone de trajectoire (34) repose sur une projection d'un modèle de trajectoire sur la deuxième partie de pièce (28).

2. Procédé selon la revendication 1,
comprenant en outre la comparaison d'au moins un paramètre géométrique, en particulier un rayon (rw), de l'outil avec un paramètre géométrique, en particulier un rayon de courbure (rk), qui décrit une partie de liaison (46) de la première partie de pièce (26) et de la deuxième partie de pièce (28), la comparaison étant en particulier basée sur au moins une valeur seuil qui peut être prédéfinie par un utilisateur.

3. Procédé selon l'une quelconque des revendications précédentes, comprenant en outre :
la détermination de segments de liaison (48) et/ou de segments d'approche (50) et/ou de segments de sortie (52), qui sont compris au moins sur certaines parties dans la zone de transition (42), pour la première zone de trajectoire (30) et/ou pour la deuxième zone de trajectoire (34).

4. Procédé selon l'une quelconque des revendications précédentes,
dans lequel la zone de transition (42) est atteinte lors du déplacement de l'outil (18) le long de la trajectoire d'outil (24) après la première zone de trajectoire (30) et la deuxième zone de trajectoire (34).

5. Procédé selon l'une quelconque des revendications précédentes, comprenant en outre :
la détermination de la zone de transition (42) de telle sorte que ses segments de trajectoire (44) chevauchent au moins sur certaines parties la première zone de trajectoire (30) et/ou la deuxième zone de trajectoire (34), les segments de trajectoire (44) de la zone de transition (42) étant en particulier déterminés de telle sorte qu'ils soient graduellement soulevés de la pièce (14) là où ils chevauchent la première zone de trajectoire (30) et/ou la deuxième zone de trajectoire (32).

6. Procédé selon l'une quelconque des revendications précédentes, comprenant en outre :
la détermination des segments de trajectoire (44) de la zone de transition (42) de telle sorte qu'ils décrivent une trajectoire de remplissage en spirale pour la zone de transition (42).

7. Procédé selon l'une quelconque des revendications précédentes, comprenant en outre :
la détermination de la première zone de trajectoire (30) en déterminant des segments de trajectoire provisoires (54) qui reposent sur une couverture complète de la première partie de pièce (26) à l'aide de la première stratégie d'adaptation, puis en raccourcissant les segments de trajectoire provisoires (54) dans la première zone de bord (38) ; et/ou
la détermination de la deuxième zone de trajectoire (34) en déterminant des segments de trajectoire provisoires (54) qui reposent sur une couverture complète de la deuxième partie de pièce (28) à l'aide de la deuxième stratégie d'adaptation, puis en raccourcissant les segments de trajectoire provisoires (54) dans la deuxième zone de bord (40).

8. Procédé selon la revendication 7,
dans lequel le raccourcissement des segments de trajectoire provisoires (54) repose sur au moins une courbe de délimitation (56) qui est superposée à la première partie de pièce (26) et/ou à la deuxième partie de pièce (28).

9. Procédé selon l'une quelconque des revendications précédentes,
dans lequel l'outil (18) a un rayon d'outil réel (rw) qui est pris en compte lors de la détermination de la trajectoire d'outil (24), et
dans lequel la détermination de la zone de transition (42) repose sur au moins un rayon d'outil (rv) agrandi par rapport au rayon d'outil réel (rw).

10. Procédé selon la revendication 9,
dans lequel les points de départ et/ou les points d'arrivée de segments de trajectoire (32) de la première zone de trajectoire (30) qui définissent la première zone de bord (38) sont déterminés en déterminant, en tenant compte dudit au moins un rayon d'outil agrandi (rv), jusqu'où l'outil (18) peut être déplacé vers la deuxième partie de pièce (28) lors d'un usinage de la première partie de pièce (26) ; et/ou
dans lequel les points de départ et/ou les points d'arrivée de segments de trajectoire (36) de la deuxième zone de trajectoire (34) qui définissent la deuxième zone de bord (40) sont déterminés en déterminant, en tenant compte dudit au moins un rayon d'outil agrandi (rv), jusqu'où l'outil (18) peut être déplacé vers la première partie de pièce (26) lors d'un usinage de la deuxième partie de pièce (28).

11. Programme d'ordinateur conçu pour mettre en œuvre un procédé selon l'une quelconque des revendications précédentes.

12. Produit logiciel comprenant au moins un support de stockage (58) sur lequel est stocké le code de programme d'un programme d'ordinateur selon la revendication 11.

13. Procédé d'usinage par enlèvement de matière d'une pièce (14) au moyen d'un outil (18) qui, pour l'usinage, est guidé le long d'une trajectoire d'outil (24) qui a été déterminée dans un procédé selon l'une quelconque des revendications 1 à 10.
